# EUROPEAN PATENT SPECIFICATION

(11) **EP 2 057 542 B1**
(45) Date of publication and mention of the grant of the patent: **15.07.2020**
(21) Application number: 07826177.3
(22) Date of filing: 28.08.2007
(51) Int. Cl.: G06F 9/445

(54) **MULTI-CORE DEVICE WITH OPTIMIZED MEMORY CONFIGURATION**
MEHRKERNVORRICHTUNG MIT OPTIMIERTER SPEICHERKONFIGURATION
DISPOSITIF MULTICOEUR À CONFIGURATION DE MÉMOIRE OPTIMISÉE

(30) Priority: 31.08.2006 EP 06300905
(43) Date of publication of application: 13.05.2009
(60) Divisional application: 20174532.0
(73) Proprietor: SnapTrack, Inc., San Diego, CA 92121 (US)
(72) Inventor: GRANDIN, Emmanuel, 5656 AG Eindhoven (NL)
(74) Representative: Wagner & Geyer
(86) International application number: PCT/IB2007/053458
(87) International publication number: WO 2008/026165

(56) References cited:
- EP-A- 1 679 590
- US-A1- 2003 163 681
- US-A1- 2003 200 448
- US-A1- 2005 128 795

## Description

The present invention relates to electronic equipments comprising at least two cores (i.e. processors or micro-controllers).

As it is known by the man skilled in the art, a core (processor or microcontroller) is a component of an electronic equipment which is provided for running some software, i.e. some code which is stored into an external ROM ("Read Only Memory"), such as a boot ROM, but not into the core internal ROM. This means that the software to be run has to be provided to the core in order to be executed. Several memory configurations may be used either for storing the software or for executing it.

Apart of that, a core needs a dynamic memory, generically called RAM (for "Random Access Memory"), to temporarily store the data that are associated with the running software and/or the code for this running software. Generally a core comprises an internal RAM, whose storing capacity (or size) is in most cases not sufficient to store all the needed data. In such a case an external RAM has to be associated with the core.

For example, the software to be executed can be stored into a NOR flash memory and executed from this NOR flash memory if its memory interface allows it. For instance a PSRAM ("Pseudo-Static RAM") can be used in association with this NOR flash memory to provide for the dynamic memory storage of data that are associated with the running software. In a variant, the NOR flash memory can be replaced with a NAND flash memory, and the PSRAM can be replaced with a SDRAM ("Synchronous Dynamic RAM"). In this variant the NAND flash memory content (the code to be executed) must be loaded into the SDRAM prior to run it because a NAND flash interface does not support direct code execution from it. A lot of other memory configurations may be envisaged depending on the storing capacity needed (PSRAMs are cheaper than SDRAMs in lower densities, but SDRAMs are cheaper than PSRAMs in high densities) or on the PCB ("Printed Circuit Board") area that might be allocated for the memory components.

Some specific problems appear when applying these memory configurations to multi-core electronic equipments. For the sake of clarity one will consider hereafter the dual-core case.

In a dual-core electronic equipment the two cores (processors or microcontrollers) cooperate to achieve the full equipment requirements. So, both cores have to be provided with softwares, which are initially stored somewhere in external ROM(s) in the electronic equipment, and that they must execute in some memory area while needing a RAM area (internal and/or external), at least for dynamic memory storage. Two classes of memory configuration are candidates to support such technical constrains.

In a first class a first core manages the storage of both softwares (for instance into a NAND flash memory) and provides the second core with the software it has to execute (for instance by copy from the NAND flash memory to a RAM) at each equipment boot. In this case each core must have its own RAM for data storage (or a more complex shared RAM to serve both cores), but the RAM memory for the second core has also to be designed (in storage capacity (or size) and performance) in order to allow the software execution from itself (because the second core cannot execute it from elsewhere). Such a constraint implies that the first core must act as a "master" while the second core acts as a "slave", at least during each boot phase, which also impacts the security policies (when softwares have to be verified prior execution by a core). The drawback of this first class resides in the time required at each boot to transfer software into the second core's RAM, which might be not negligible (typically several seconds) and could penalize the overall equipment boot time.

In a second class each core has its own memory configuration (for instance a first core with a NOR flash memory and a PSRAM, and a second core with a NAND flash memory and a SDRAM). This second class allows to reuse existing and proven single- core configurations on each side (behaving as two independent systems), and avoids issues that could arise from a common memory configuration (for instance an increased boot time). But this second class has two main drawbacks : it implies higher cost and PCB area and each core has to be able to download its own software from an external source; having duplication of memories is more power consuming, which means that the power consumption cannot be optimised from an equipment wide perspective.

US 2003/0200448 A1 discloses a data authentication technique for a data access control function of an integrated system. The technique includes passing a data request from a functional master of the integrated system through the data access control function, and responsive to the data request, selectively authenticating requested data. The selective authentication, which can occur transparent to the functional master initiating the data request, includes employing integrity value generation on the requested data when originally stored and when retrieved, in combination with encryption and decryption thereof to ensure the authenticity of the requested data. As an enhancement, cascading integrity values may be employed to facilitate data authentication.

US 2005/0128795 A1 discloses a reduced power method of writing MRAM bits. The reduced power method includes writing MRAM bits by applying a first magnetic field having a low magnitude, then determining if the bit has switched. If not, a second magnetic field having a higher magnitude is applied. Applying magnetic fields to an MRAM bit cell is accomplished by sending a current pulse through a strip line adjacent to the MRAM bit cell. The technique can be performed for every write to an MRAM bit. Alternatively, the weaker magnetic field can be applied during system test or system initialization, and if the weaker field fails to write the bit to a desired value, the failing result is stored and each subsequent write to the MRAM bit utilizes the stronger magnetic field.

So, the object of this invention is to improve the situation.

To this end, according to the present invention, a multi-core device for an electronic equipment is provided as set forth in claim 1. The present invention also provides an electronic equipment as set forth in claim 5. Preferred embodiments of the present invention may be gathered from the dependent claims.

For this purpose, it provides a multi-core device, intended for equipping an electronic equipment, and comprising at least two cores arranged to execute different softwares stored into storing means, at least one of these cores being associated with i) a primary memory of the RAM type, being part of the memory means and arranged for durably storing, without power consumption, a software to be executed once it has been transferred and data associated with this software when it is executed, and ii) a memory interface coupled to the primary memory and arranged to allow the associated core to execute the software durably stored into its associated primary memory and to access to the data associated with this software when it is executed.

The multi-core device according to the invention may include additional characteristics considered separately or combined, and notably :
- another core may be associated with a secondary memory being part of the device memory means, arranged for durably storing the softwares to be executed by each of the cores and to transfer a durably stored software in order it could be stored into the corresponding primary memory;
   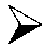 the secondary memory may be a flash memory of the ROM type, for instance;
   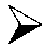 this other core may be associated with i) an external memory of the RAM type, being part of the device memory means, coupled to the secondary memory and capable of dynamically storing the software to be executed by the other associated core once it has been transferred from this secondary memory, and ii) a memory interface coupled to the external memory and arranged to allow the other core to execute the corresponding software stored into the external memory;
   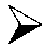 in a variant the other core may comprise an internal memory of the RAM type, part of the device memory means, coupled to the secondary memory and capable of dynamically storing the software to be executed by the associated other core once it has been transferred from the secondary memory. In this case, the secondary memory is arranged to transfer a durably stored software in order it could be stored into the internal memory to be executed by the other core;
- each core may be associated with i) a primary memory of the RAM type, being part of the device memory means and arranged for durably storing, without power consumption, a software to be executed once it has been transferred and data associated with this software when it is executed, and ii) a memory interface coupled to the primary memory and arranged to allow this associated core to execute the software durably stored into the associated primary memory;
   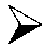 it may further comprise an external memory connected to one of the cores and arranged for storing the code of the softwares before their transfer into the primary memories;
- each primary memory may be a Magnetic Random Access Memory (MRAM), for instance, or any other RAM type of memory with the following comparable (or equivalent) characteristics:
   a. at least the same data retention time without power supply (preferably infinite),
   b. at least the same maximum number of writing cycles (preferably unlimited),
   c. less or equal power consumption during read and write operations (preferably equivalent to a SDRAM or a PSRAM),
   d. at least same speed during these latter operations (read and write) (preferably comparable to a SDRAM),
   e. at least the same density (and preferably comparable to a SDRAM).

The invention also provides an electronic equipment comprising a multi-core device such as the one above introduced. Such an electronic equipment may be a mobile telephone, a computer (possibly of the portable type), a game or audio or video player, a television, a set-top box or a personal digital assistant (PDA), for instance.

Other features and advantages of the invention will become apparent on examining the detailed specifications hereafter and the appended drawings, wherein:
- Fig.1 schematically illustrates an example of electronic equipment comprising a first example of embodiment of a dual-core device according to the invention,
- Fig.2 schematically illustrates an example of electronic equipment comprising a second example of embodiment of a dual-core device according to the invention,
- Fig.3 schematically illustrates an example of electronic equipment comprising a third example of embodiment of a dual-core device according to the invention.

The appended drawings may not only serve to complete the invention, but also to contribute to its definition, if need be.

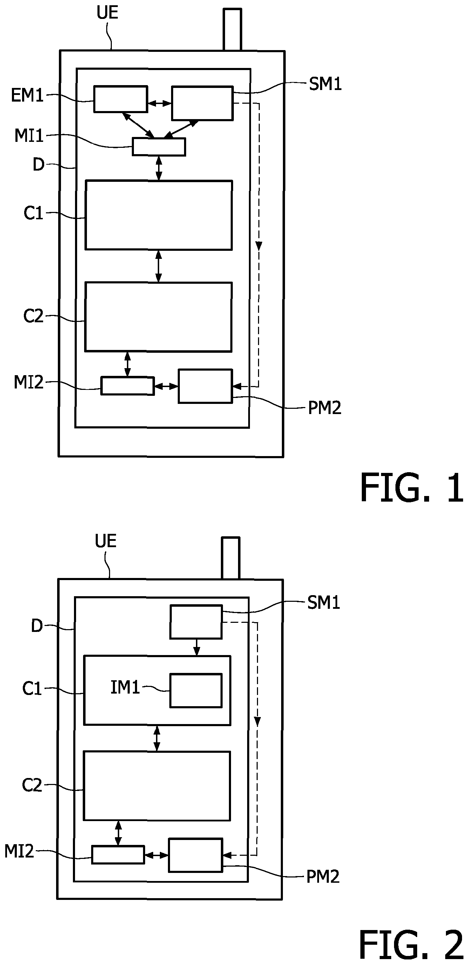

Reference is initially made to Fig.1 to describe a multi-core device D according to the invention.

In the following description it will be considered that the multi-core device D equips an electronic equipment UE, such as a mobile telephone. But, the invention is not limited to this type of electronic equipment. It applies to any type of electronic equipment, adapted or not to telecommunications, and needing at least two cores (i.e. processors or micro-controllers) cooperating to achieve chosen requirements. So, it may be also a personal digital assistant (PDA) or a computer, possibly of the portable type, or a (game or audio or video) player, or a television, or else a set-top box, for instance.

Moreover in the following description it will be considered that the multi-core device D comprises only two cores, in order to simplify the description of the invention. But, the invention is not limited to a dual-core device. Indeed, it applies to any device comprising two or more cores cooperating together.

As schematically illustrated in Fig.1, a dual-core device D according to the invention comprises at least first C1 and second C2 cores arranged to execute different softwares that are stored into storing means of this device D.

In the following description it will be considered that the first core C1 is intended for executing a first software S1, while the second core C2 is intended for executing a second software S2 (different from the first one S1). But, each core Ci (here i = 1 or 2) may be intended for executing one or more softwares.

For instance, the first core C1 is a telecom processor while the second core C2 is an application processor.

According to the invention at least the second core C2 is associated with a primary memory PM2 and a memory interface MI2. One means here by "associated with" to be coupled to a primary memory PM2 through a memory interface MI2.

Moreover, one means here by "primary memory (PMi)" a memory of the RAM type, which is part of the memory means of the device D and is notably capable of storing data without consuming electrical power as long as it is not subject to a new data reading or writing cycle. In this invention, the primary memory PMi (associated with a core Ci) is intended for storing, on the one hand, the data defining a transferred (or downloaded) software Si (i.e. the code) which must be executed by this core Ci, and on the other hand, data which are associated with this software Si when it is executed by this core Ci.

For instance, a primary memory PMi is a Magnetic Random Access Memory (or MRAM). But, a primary memory PMi may be a memory having characteristics equivalent to or better than the ones of a MRAM, and more generally it may be any type of RAM offering the six following characteristics: i) compatibility with a memory interface MIi (in order to allow execution of a software Si it stores by the associated core Ci), ii) at least the same data retention time without power supply as a MRAM, and preferably an infinite data retention time, iii) at least the same maximum number of writing cycles as a MRAM, and preferably an unlimited number, iv) less or equal power consumption during read and write operations as a MRAM, and preferably equivalent to a SDRAM or a PSRAM, and v) at least same speed during the read and write operations, and preferably a speed comparable to a SDRAM, and vi) at least the same density as a MRAM, and preferably comparable to the one of a SDRAM.

The memory interface MIi is coupled to a primary memory PMi and allows a core Ci, to which it is connected to, to execute a software Si, which is durably stored into this primary memory PMi.

In the first example of embodiment illustrated in Fig.1, the first core C1 is associated with an external secondary memory SM1, which is also part of the device memory means. This secondary memory SM1 is capable of storing in a durable manner the codes of the softwares Si (here S1 and S2), which must be executed by each core Ci. It may be also arranged to transfer a durably stored software Sj (here j = 2) into the corresponding primary memory PMj (j = 2). The transfer of the second software S2 into the primary memory PM2 is preferably carried out through the memory interface MI1, then the first core C1, then the second core C2 and finally the memory interface MI2. So in this case the secondary memory SM1 is also coupled to the memory interface MI1. But in a variant the coupling between the secondary memory SM1 and the primary memory PM2 could be direct.

Such a secondary memory SM1 may be a flash memory of the ROM type, for instance a NOR or NAND flash memory, or a hard-disk storage.

With such an arrangement, the second software S2 is transferred (or downloaded) from the secondary memory SM1 into the primary memory PM2 at the very first boot of the electronic equipment UE or each time the electronic equipment UE wants (or needs) to update it.

The secondary memory SM1 may be provided with a software Si or a new release of a software Si by a computer or a communication network to which its electronic equipment UE is connected to.

So, once the transfer of the second software S2 (i.e. the code) has been performed, the second core C2 becomes autonomous with regards to the first core C1. Therefore it can execute the second software S2 in an independent manner, and thus no time is lost for transferring the second software S2 at each electronic equipment boot.

In the first example of embodiment illustrated in Fig.1, the first core C1 is also associated with an external memory EM1 of the RAM type, which is part of the memory means of the device D. This external memory EM1 is coupled to the secondary memory SM1 and is capable of dynamically storing the code of the first software S1 once this code has been transferred (or downloaded) from the secondary memory SM1.

For instance, if the secondary memory SM1 is a NOR flash memory, the external memory EM1 may be a PSRAM ("Pseudo-Static RAM"). In this example, the PSRAM EM1 can be used to only store temporary data, whereas the code can be directly executed from the NOR flash memory SM1. In a variant, if the secondary memory SM1 is a NAND flash memory, the external memory EM1 may be a SDRAM ("Synchronous Dynamic RAM"). In this variant the code can not be executed directly from the NAND flash memory SM1 and has to be loaded into the SDRAM EM1 prior to be executed; the same situation occurs when the external memory EM1 is a hard-disk storage.

In the first example of embodiment illustrated in Fig.1, the first core C1 is also associated with a memory interface MI1. This memory interface MI1 is coupled to the external memory EM1 and allows the first core C1, to which it is connected to, to execute the first software S1 whose code is stored into this external memory EM1.

This first example of embodiment allows to reduce the cost of the device D and the area occupied by the device memory means in the printed circuit board (PCB). Indeed the second core C2 is now associated with a primary memory PM2 (for instance a MRAM) instead of being associated with a flash memory and an external RAM as it could be the case in a device of the prior art. This induces a decrease of the power consumption due to the use of only one chip (for the primary memory PM2), but also because this chip is a MRAM (or an equivalent), which does not need power to retain data (as it is the case of the flash memories) while being not limited in the number of data writing cycles. Moreover, this MRAM (or any equivalent) retaining its data, the boot phases (except the first one) take less time than in the case of a device of the prior art containing only an external RAM for the core C2.

Reference is now made to Fig.2 to describe a second example of embodiment of a multi-core device D according to the invention. This second example is a variant of the first example above described with reference to Fig.1. In this second example the memory configuration of the second core C2 is identical to the one of the first example. So the second core memory configuration only comprises a primary memory PM2 (which is coupled to the second core C2 through a memory interface MI2).

In this second example the memory configuration of the first core C1 comprises an (external) secondary memory SM1 coupled to an internal memory IM1. More precisely, the first core C1 comprises an internal memory IM1 of the RAM type, which is part of the device memory means and is coupled to the secondary memory SM1 in which the code of the first software S1 (but also the code of the second software S2) is durably stored. This internal memory IM1 is intended for dynamically storing the code of the first software S1 which can be executed by the first core C1 once this code has been transferred (or downloaded) from the secondary memory SM1. The coupling between the secondary memory SM1 and the internal memory IM1 is usually carried out through the first core C1 (as illustrated). But in a variant it could be a direct coupling.

So, the secondary memory SM1 is arranged to transfer the durably stored first S1 and second S2 softwares respectively into the internal memory IM1 of the first core C1 and into the primary memory PM2 associated with the second core C2 in order they could be executed in an autonomous way by these first C1 and second C2 cores. As illustrated, the transfer of the second software S2 into the primary memory PM2 is preferably carried out through the first core C1, then the second core C2 and finally the memory interface MI2. But in a variant the coupling between the secondary memory SM1 and the primary memory PM2 could be direct.

Such a secondary memory SM1 may be a flash memory of the ROM type, for instance a NOR or NAND flash memory or a hard-disk storage.

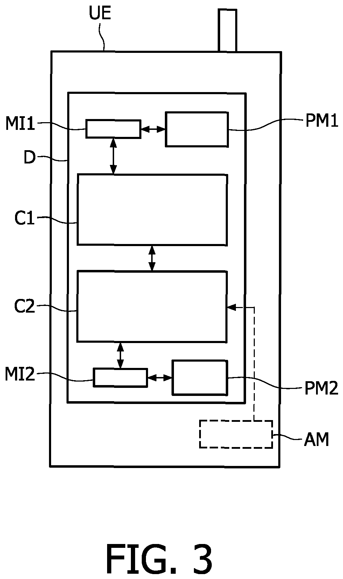

Reference is now made to Fig.3 to describe a third example of embodiment of a multi-core device D according to the invention. In this third example the memory configurations of the first C1 and second C2 cores are similar (but not necessarily identical). More precisely, the memory configuration of each core Ci is similar to the memory configuration of the second core C2 of the first example above described with reference to Fig.1. So, the memory configuration of each core Ci comprises only a primary memory PMi (corresponding to the definition given above), coupled to the associated core Ci through a memory interface MIi.

The primary memory PM1 associated with the first core C1 may be identical to the primary memory PM2 associated with the second core C2. For instance, they are both of the MRAM type. But this is not mandatory and depends on the software Si they are respectively intended for durably storing.

As it is illustrated, before being transferred (or downloaded) into the primary memories PMi, the code of the softwares Si may be stored into an external auxiliary memory AM of the ROM type. Such an auxiliary memory AM may be either part of the device D, or part of the electronic equipment UE as illustrated in Fig.3. It is important to notice that this external auxiliary memory AM is optional, because the primary memories PM1 and PM2 might also be populated in the factory, or maybe only primary memory PMI, which then takes the role of both the secondary memory SM1 and the external memory EM1 illustrated in Fig.1.

However, this external auxiliary memory AM can be seen as a backup storage of the softwares S1 and S2 in case of a global failure of the system (corruption of the versions of the softwares S1 and S2 contained into the primary memories PM1 and PM2), in order to be able to get back to a well-known user equipment state (factory settings).

The external auxiliary memory AM must be connected to one of the cores Ci (for instance C2 as illustrated), which then becomes responsible for the user equipment boot phase and has to transfer (if necessary) the softwares S1 and/or S2 into the primary memory PM1 and/or the primary memory PM2.

This auxiliary memory AM is arranged to transfer (or download) the code of the softwares Si that it stores in order it could be stored into the corresponding primary memory PMi at the very first boot of the electronic equipment UE or each time the electronic equipment UE wants (or needs) to update at least one of them.

When this external auxiliary memory AM is present, it may be provided with a software Si or a new release of a software Si by a computer or a communication network to which its electronic equipment UE is connected to.

With such an arrangement, the softwares Si are transferred (or downloaded) from the auxiliary memory AM into the primary memories PM1 and PM2 at the very first boot of the electronic equipment UE or each time the electronic equipment UE wants (or needs) to update one of them.

So, once the transfer of the softwares S1 and S2 (i.e. the codes) have been performed, the first C1 and second C2 cores become autonomous. Therefore each core Ci can execute its software Si in an independent manner, and thus no time is lost for transferring the softwares Si at each boot.

This third example of embodiment allows to still more reduce the cost of the device D and the area occupied by the device memory means in the printed circuit board (PCB). Indeed each core Ci is now associated with a primary memory PMi (for instance a MRAM) instead of being associated with a flash memory and an external RAM as it is the case in a device of the prior art. This induces an important decrease of the power consumption due to the use of only two chips (for the primary memories PM1 and PM2), but also because these chips are MRAMs (or equivalents) which do not need power to retain data (as it is the case of the flash memories) while being not limited in the number of data writing cycles.

The multi-core device D, according to the invention, may be an integrated circuit realized in CMOS technology or in any technology used in chip industry fabrication. It might also be composed of several integrated circuits (ICs), for example one integrated circuit (IC) for each core or memory, which can also be stacked in some packages or popped together, or also one integrated circuit (IC) for each (core and memory) subsystem (for example C2, MI2 and PM2 could be part of the same IC).

The invention is not limited to the embodiments of multi-core device and electronic equipment described above, only as examples, but it encompasses all alternative embodiments which may be considered by one skilled in the art within the scope of the claims hereafter.

## Claims

1. Multi-core device (D) for an electronic equipment (UE), comprising at least two cores (Ci) arranged to execute different softwares (Si), including a first software (S1) and a second software (S2), stored into storing means including a primary memory (PM2), a secondary memory (SM1) arranged for durably storing the softwares (Si) to be executed by each of said cores (Ci), and an external memory (EM1), wherein the second software (S2) is different from the first software (S1), wherein at least one (C2) of said cores (Ci) is associated with i) the primary memory (PM2) of the RAM type, arranged for durably storing, without power consumption, the second software (S2) to be executed by the at least one (C2) of said cores once said second software (S2) has been transferred from said secondary memory (SM1) into the primary memory (PM2) along with data associated with said second software (S2) when it is executed, and ii) a first memory interface (MI2) coupled to said primary memory (PM2) and arranged to allow said at least one core (C2) to execute said second software (S2) durably stored into said primary memory (PM2) and to access the data associated with this second software (S2) when it is executed, wherein another one (C1) of said cores (Ci) is associated with said secondary memory (SM1), and
wherein said another one (C1) of said cores is associated with i) said external memory (EM1) of the RAM type, which is coupled to said secondary memory (SM1) and is capable of dynamically storing the first software (S1) to be executed by said another (C1) of said cores once said first software (S1) has been transferred from said secondary memory (SM1), and ii) a second memory interface (MI1) coupled to said external memory (EM1) and arranged to allow said another one (C1) of said cores to execute the first software (S1) stored in said external memory (EM1), wherein said multi-core device (D) is configured such that the second software (S2) is transferred or downloaded from the secondary memory (SM1) into the primary memory (PM2) at the very first boot of the electronic equipment (UE) or each time the electronic equipment (UE) wants or needs to update it, so, once the transfer of the second software (S2) has been performed, the at least one core (C2) becomes autonomous with regards to the another core (C1) and therefore can execute the second software (S2) in an independent manner, and thus no time is lost for transferring the second software (S2) at each electronic equipment boot.

2. Multi-core device according to claim 1, **characterized in that** said secondary memory (SM1) is a flash memory of the ROM type.

3. Multi-core device according to one of claims 1 or 2, **characterized in that** the primary memory (PM2) is a Magnetic Random Access Memory (MRAM).

4. Multi-core device according to one of claims 1 to 3, **characterized in that** the primary memory (PM2) is a memory presenting the following characteristics:
i) compatibility with a memory interface (Mli),
ii) at least the same data retention time without power supply as a Magnetic Random Access Memory (MRAM),
iii) at least the same maximum number of writing cycles as a Magnetic Random Access Memory (MRAM),
iv) less or equal power consumption during read and write operations as a Magnetic Random Access Memory (MRAM),
v) at least the same speed during the read and write operations as a Magnetic Random Access Memory (MRAM),
vi) at least the same density as a Magnetic Random Access Memory (MRAM).

5. Electronic equipment (UE), **characterized in that** it comprises a multi-core device (D) according to one of the preceding claims.

6. Electronic equipment according to claim 5, **characterized in that** it is chosen in a group comprising at least a mobile telephone, a computer, a portable computer, a game player, an audio player, a video player, a television, a set-top box and a personal digital assistant.

## Patentansprüche

1. Mehrkern- bzw. Multi-Core-Einrichtung (D) für eine elektronische Einrichtung (UE), die wenigstens zwei Kerne bzw. Cores (Ci) aufweist, die ausgelegt sind zum Ausführen unterschiedlicher Programme bzw. Software (Si), die eine erste Software (S1) und eine zweite Software (S2) aufweist, die in Speichermitteln gespeichert ist, die einen primären Speicher (PM2), einen sekundären Speicher (SM1), der ausgelegt ist zum dauerhaften Speichern der Software (Si), die durch jeden der Kerne (Ci) ausgeführt werden soll, und einen externen Speicher (EM1) aufweisen, wobei sich die zweite Software (S2) von der ersten Software (S1) unterscheidet, wobei wenigstens einer (C2) der Kerne (Ci) assoziiert ist mit i) dem primären Speicher (PM2) des RAM-Typs, der ausgelegt ist zum dauerhaften Speichern, ohne Leistungsverbrauch, der zweiten Software (S2), die durch den wenigstens einen (C2) der Kerne ausgeführt werden soll, sobald die zweite Software (S2) von dem sekundären Speicher (SM1) in den primären Speicher (PM2) transferiert worden ist, und zwar zusammen mit Daten, die mit der zweiten Software (S2) assoziiert sind, wenn sie ausgeführt wird, und ii) einer ersten Speicherschnittstelle (MI2), die an den primären Speicher (PM2) gekoppelt ist und ausgelegt ist dem wenigstens einen Kern (C2) zu gestatten, die zweite Software (S2) auszuführen, die dauerhaft in dem primären Speicher (PM2) gespeichert ist, und auf die Daten zuzugreifen, die mit dieser zweiten Software (S2) assoziiert sind, wenn sie ausgeführt wird, wobei ein anderer (C1) der Kerne (Ci) mit dem sekundären Speicher (SM1) assoziiert ist, und
wobei der andere (C1) der Kerne assoziiert ist mit i) dem externen Speicher (EM1) des RAM-Typs, der an den sekundären Speicher (SM1) gekoppelt ist und in der Lage ist zum dynamischen Speichern der ersten Software (S1), die durch den anderen (C1) der Kerne ausgeführt werden soll, sobald die erste Software (S1) von dem sekundären Speicher (SM1) transferiert worden ist, und ii) einer zweiten Speicherschnittstelle (MI1), die an den externen Speicher (EM1) gekoppelt ist und ausgelegt ist dem anderen (C1) der Kerne zu gestatten die erste Software (S1) auszuführen, die in dem externen Speieher (EM1) gespeichert ist, wobei die Multi-Core-Einrichtung (D) so konfiguriert ist, dass die zweite Software (S2) von dem sekundären Speicher (SM1) in den primären Speicher (PM2) transferiert oder heruntergeladen wird beim ersten Booten bzw. Starten der Elektronikeinrichtung (UE) oder jedes Mal, wenn die Elektronikeinrichtung (UE) diesen aktualisieren möchte oder muss, so dass, sobald der Transfer der zweiten Software (S2) durchgeführt worden ist, der wenigstens eine Kern (C2) autonom bezüglich des anderen Kerns (C1) wird und somit die zweite Software (S2) auf eine unabhängige Weise ausführen kann, und somit keine Zeit verloren geht für das Transferieren der zweiten Software (S2) bei jedem Startvorgang der Elektronikeinrichtung.

2. Multi-Core-Einrichtung nach Anspruch 1, die **dadurch gekennzeichnet ist, dass** der sekundäre Speicher (SM1) ein Flash-Speicher des ROM-Typs ist.

3. Multi-Core-Einrichtung nach einem der Ansprüche 1 oder 2, **dadurch gekennzeichnet, dass** der primäre Speicher (PM2) ein MRAM (MRAM = Magnetic Random Access Memory bzw. magnetischer Speicher mit wahlfreiem Zugriff) ist.

4. Multi-Core-Einrichtung nach einem der Ansprüche 1 bis 3, **dadurch gekennzeichnet, dass** der primäre Speicher (PM2) ein Speicher ist, der die folgenden Charakteristiken aufweist:
i) Kompatibilität mit einer Speicherschnittstelle (MIi),
ii) wenigstens die gleiche Datenspeicherzeit ohne Leistungsversorgung wie ein MRAM (MRAM = Magnetic Random Access Memory),
iii) wenigstens die gleiche maximale Anzahl von Schreibzyklen wie ein MRAM (MRAM = Magnetic Random Access Memory),
iv) geringerer oder gleicher Leistungsverbrauch während Lese- und Schreiboperationen wie ein MRAM (MRAM = Magnetic Random Access Memory),
v) wenigstens die gleiche Geschwindigkeit während der Lese- und Schreiboperationen wie ein MRAM (MRAM = Magnetic Random Access Memory),
vi) wenigstens die gleiche Dichte wie ein MRAM (MRAM = Magnetic Random Access Memory).

5. Elektronikeinrichtung (UE), die **dadurch gekennzeichnet ist, dass** sie eine Multi-Core- bzw. Mehrkerneinrichtung (D) nach einem der vorhergehenden Ansprüche aufweist.

6. Elektronikeinrichtung nach Anspruch 5, die **dadurch gekennzeichnet ist, dass** sie aus einer Gruppe ausgewählt ist, die wenigstens ein Mobiltelefon, einen Computer, einen tragbaren Computer, eine Spielekonsole, eine Audioabspielvorrichtung, eine Videoabspielvorrichtung, einen Fernseher, eine Set-Top-Box und einen persönlichen digitalen Assistenten aufweist.

## Revendications

1. Dispositif multi-cœur (D) destiné à un équipement électronique (UE), comprenant au moins deux cœurs (Ci) agencés pour exécuter différents programmes (Si), incluant un premier programme (S1) et un deuxième programme (S2), stockés dans des moyens de stockage comportant une mémoire primaire (PM2), une mémoire secondaire (SM1) agencées pour stocker de façon durable les logiciels (Si) devant être exécutés par chacun desdits cœurs (Ci), et une mémoire externe (EM1), dans lequel le deuxième programme (S2) est différent du premier programme (S1), dans lequel au moins un cœur (C2) desdits cœurs (Ci) est associé à i) la mémoire primaire (PM2) du type RAM, agencée pour stocker de façon durable, sans consommation d'énergie, le deuxième programme (S2) qui doit être exécuté par ledit au moins un cœur (C2) desdits cœurs une fois que ledit deuxième programme (S2) a été transféré depuis ladite mémoire secondaire (SM1) dans ladite mémoire primaire (PM2) en même temps que des données associées audit deuxième programme (S2) quand il est exécuté, et ii) une première interface mémoire (MI2) couplée à ladite mémoire primaire (PM2) et agencée pour permettre audit au moins un cœur (C2) d'exécuter ledit deuxième programme (S2) stocké de façon durable dans ladite mémoire primaire (PM2) et d'accéder aux données associées à ce deuxième programme (S2) quand il est exécuté, dans lequel un autre cœur (C1) desdits cœurs (Ci) est associé à ladite mémoire secondaire (SM1), et
dans lequel ledit autre cœur (C1) desdits cœurs est associé à i) ladite mémoire externe (EM1) du type RAM, qui est couplée à ladite mémoire secondaire (SM1) et est capable de stocker dynamiquement le premier programme (S1) qui doit être exécuté par ledit autre cœur (C1) desdits cœurs une fois que ledit premier programme (S1) a été transféré depuis ladite mémoire secondaire (SM1), et ii) une deuxième interface mémoire (MI1) couplée à ladite mémoire externe (EM1) et agencée pour permettre audit autre cœur (C1) desdits cœurs d'exécuter le premier programme (S1) stocké dans ladite mémoire externe (EM1), dans lequel ledit dispositif multi-cœur (D) est configuré de sorte que le deuxième programme (S2) est transféré ou téléchargé depuis la mémoire secondaire (SM1) dans la mémoire primaire (PM2) au tout premier démarrage de l'équipement électronique (UE) ou à chaque fois que l'équipement électronique (UE) le demande ou a besoin de le mettre à jour, de sorte que, une fois que le transfert du deuxième programme (S2) a été effectué, ledit au moins un cœur (C2) devient autonome par rapport à l'autre cœur (C1) et peut, par conséquent, exécuter le deuxième programme (S2) de façon indépendante, et ainsi aucun temps n'est perdu pour transférer le deuxième programme (S2) à chaque démarrage de l'équipement électronique.

2. Dispositif multi-cœur selon la revendication 1, **caractérisé en ce que** ladite mémoire secondaire (SM1) est une mémoire flash du type ROM.

3. Dispositif multi-cœur selon l'une des revendications 1 ou 2, **caractérisé en ce que** la mémoire primaire (PM2) est une mémoire vive magnétique (MRAM).

4. Dispositif multi-cœur selon l'une quelconque des revendications 1 à 3, **caractérisé en ce que** la mémoire primaire (PM2) est une mémoire présentant les caractéristiques suivantes :
i) compatibilité avec une interface mémoire (MIi),
ii) au moins le même temps de rétention de données en l'absence d'alimentation qu'une mémoire vive magnétique (MRAM),
iii) au moins le même nombre maximal de cycles d'écriture qu'une mémoire vive magnétique (MRAM),
iv) une consommation d'énergie inférieure ou égale pendant des opérations de lecture et d'écriture qu'une mémoire vive magnétique (MRAM),
v) au moins la même vitesse pendant les opérations de lecture et d'écriture qu'une mémoire vive magnétique (MRAM),
vi) au moins la même densité qu'une mémoire vive magnétique (MRAM).

5. Équipement électronique (UE), **caractérisé en ce qu'**il comprend un dispositif multi-cœur (D) selon l'une quelconque des revendications précédentes.

6. Équipement électronique selon la revendication 5, **caractérisé en ce qu'**il est choisi dans un groupe comprenant au moins un téléphone mobile, un ordinateur, un ordinateur portable, un lecteur de jeux, un lecteur audio, un lecteur vidéo, une télévision, un boîtier décodeur et un assistant numérique personnel.
